(19) Europäisches Patentamt
European Patent Office
Office européen des brevets

(11) **EP 1 672 253 B1**

(12) **FASCICULE DE BREVET EUROPEEN**

(45) Date de publication et mention
de la délivrance du brevet:
**14.05.2008 Bulletin 2008/20**

(51) Int Cl.:
***F16H 61/04*** *(2006.01)*

(21) Numéro de dépôt: **05300989.0**

(22) Date de dépôt: **01.12.2005**

(54) **procédé de synchronisation pour boîte de vitesses de type "double embrayage"**

Verfahren zur Synchronisierung eines Doppelkupplungsgetriebes

method for synchronizing a double clutch transmission

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **17.12.2004 FR 0413506**

(43) Date de publication de la demande:
**21.06.2006 Bulletin 2006/25**

(73) Titulaire: **Renault**
**92109 Boulogne Billancourt (FR)**

(72) Inventeur: **Devaud, Emmanuel**
**F-92140 Clamart (FR)**

(74) Mandataire: **Rougemont, Bernard**
**RENAULT TECHNOCENTRE**
**Département Propriété Intellectuelle**
**Sce 00267 TCR GRA 2 36**
**1, avenue du Golf**
**78288 Guyancourt cedex (FR)**

(56) Documents cités:
**EP-A- 1 197 685          EP-A- 1 400 731**
**DE-A1- 10 033 811     DE-A1- 10 253 616**
**DE-C1- 19 939 819      FR-A- 2 799 256**
**FR-A- 2 827 553          US-A- 5 890 392**

## EP 1 672 253 B1

**Description**

La présente invention concerne un procédé et un dispositif de synchronisation des arbres d'une boîte de vitesses de type double embrayage. Ce type de boîte comporte notamment deux arbres primaires qui peuvent s'accoupler au moteur par le biais de deux embrayages distincts. Lorsqu'un rapport est engagé, l'embrayage correspondant est en prise sur l'arbre de sortie du moteur et le pignon fou du rapport de vitesse engagé est lié en rotation par des crabots.

Différents dispositifs ont été développés pour permettre la synchronisation des arbres d'une boite de vitesse de type double embrayage lors d'un changement de rapport.

Une première solution au problème de synchronisation des arbres dans une boite à double embrayage consiste à utiliser des anneaux de synchronisation. Lorsque l'on veut changer de rapport, en particulier engager un rapport nécessitant un changement d'arbre primaire en prise, il est nécessaire de venir synchroniser, puis craboter le pignon fou correspondant au rapport cible. La synchronisation en question revient à égaliser la vitesse de ce pignon fou et la vitesse de l'arbre secondaire par déplacement en translation selon la direction de l'axe de rotation de l'arbre secondaire d'un anneau de synchronisation. Cet anneau de synchronisation est fixé en rotation par rapport à l'axe de l'arbre secondaire. Il vient frotter sur le pignon fou à engager de façon à l'accélérer ou à le ralentir, selon les besoins.

Cependant, du fait de leur dimensionnement, les anneaux et les actionneurs sont des pièces fragiles. Cette fragilité impose notamment un effort maximal applicable aux anneaux de synchronisation par les actionneurs de synchronisation. Cet effort maximal applicable aux anneaux de synchronisation ne permet pas toujours de réaliser la synchronisation dans la durée impartie.

Le brevet US 5,890,392 décrit un procédé de synchronisation des arbres d'une boîte de vitesses de type « double embrayage » n'utilisant pas d'anneaux de synchronisation. Selon ce procédé, lors d'un changement de rapport montant (sous charge, c'est-à-dire avec transmission d'un couple moteur, ou sur erre, c'est-à-dire sans transmission d'un couple moteur) et descendant sous charge, la synchronisation est réalisée au moyen de l'embrayage non en prise. L'embrayage initialement en prise transmet l'intégralité du couple moteur. La pression de maintient de l'embrayage étant légèrement diminuée, celui-ci glisse très légèrement par rapport au disque solidaire de l'arbre de sortie du moteur appelé volant moteur. La fermeture de l'embrayage non en prise intervient progressivement, selon une consigne en forme de rampe. Ainsi, cet embrayage transmet progressivement une part de plus en plus importante du couple moteur. Pendant ce temps, l'embrayage initialement en prise glisse de plus en plus par rapport au volant moteur sous l'effet d'une pression de maintien toujours plus faible. Quand, finalement, l'embrayage initialement non en prise transmet l'intégralité du couple moteur, l'autre embrayage est complètement ouvert. L'embrayage initialement non en prise peut alors être mis en prise sans modification du couple moteur.

Cependant, ce dernier procédé ne peut pas être utilisé pour un changement de rapport descendant sur erre. En effet, dans ce cas, la synchronisation consiste à accélérer la rotation de l'arbre primaire correspondant à l'embrayage non en prise, afin de l'amener à avoir une vitesse de rotation qui est plus élevée que la vitesse de rotation de l'arbre de sortie du moteur. Pour accélérer l'arbre primaire non en prise, un dispositif de synchronisation additionnel comportant deux roues de friction est alors prévu dans le dispositif décrit dans le brevet US 5,890,392.

De plus, ce procédé apparaît peu précis et lent, la précision et le temps de réponse d'un actionneur d'embrayage n'étant pas de même nature que ceux d'un actionneur de synchronisation.

Le brevet DE 199 39 819 décrit un procédé de synchronisation des arbres d'une boîte de vitesse de type "double embrayage" utilisant à la fois l'embrayage non en prise et le dispositif de synchronisation à anneaux. Une durée maximale de synchronisation n'est cependant pas imposée.

Le dispositif selon l'invention a, entre autres, pour but de réaliser la synchronisation dans la durée impartie, dans tous les cas de figures, notamment sans nécessité de dispositif additionnel spécifique au cas de la descente de rapport sur erre.

On atteint ce but de l'invention au moyen d'un procédé de synchronisation des arbres d'une boîte de vitesses de type double embrayage, comportant deux embrayages associés chacun à un arbre primaire. Au moins un engrenage est monté sur chacun des arbres primaires. Chaque engrenage peut coopérer avec un pignon fou, monté libre en translations sur au moins un arbre secondaire. Chacun des pignons fous peut coopérer avec un dispositif de synchronisation à anneaux, commandé chacun par un actionneur de synchronisation. Le procédé de synchronisation selon l'invention met en oeuvre l'un desdits dispositifs à anneau de synchronisation pour réaliser la synchronisation desdits arbres primaires et/ou secondaires. Le procédé selon l'invention est remarquable en ce que, si l'effort nécessaire pour que la synchronisation soit réalisée dans une durée maximale de synchronisation prédéterminée Ds dépasse l'effort maximal que le dispositif de synchronisation peut fournir, alors l'embrayage non en prise est également mis en oeuvre de façon à réaliser la synchronisation dans la durée impartie Ds.

Ainsi, si le dispositif à anneaux de synchronisation n'est pas suffisant pour synchroniser l'arbre à synchroniser dans la durée impartie, l'embrayage non en prise est mis en oeuvre soit simultanément, soit antérieurement à la mise en oeuvre du dispositif à anneaux. La synchronisation s'en trouve accélérée.

De préférence, le choix du procédé de synchronisation est réalisé selon un algorithme principal comportant les étapes suivantes :

- calcul du différentiel $N_{actuel}$ - $N_{futur}$ entre la vitesse angulaire $N_{actuel}$ d'un pignon fou à synchroniser et sa vitesse angulaire future $N_{futur}$, une fois synchronisé;
- calcul d'un effort $F_{min}$ minimal à appliquer sur un anneau de synchronisation pour synchroniser ledit pignon fou dans la durée prédéterminée Ds, ledit effort dépendant, entre autres, dudit différentiel $N_{actuel}$ - $N_{futur}$ ;
- calcul d'un effort $F_{max}$ correspondant au plus grand des deux efforts suivant :

- l'effort maximal que peut supporter ledit anneau de synchronisation compte tenu de ses caractéristiques mécaniques ;
- l'effort maximal que peut fournir ledit actionneur de synchronisation ;
- comparaison desdits efforts $F_{min}$ et $F_{max}$ ;
- émission, en fonction de ladite comparaison de $F_{min}$ et $F_{max}$ :

- d'une consigne de sortie destinée à l'asservissement dudit actionneur de synchronisation si $F_{min} < F_{max}$ ;

- d'une consigne de sortie destinée à l'asservissement de l'actionneur dudit embrayage correspondant audit rapport à synchroniser et, éventuellement, d'une consigne de sortie destinée à l'asservissement dudit actionneur de synchronisation si $F_{min} \geq F_{max}$ ;

- retour au début dudit algorithme principal si $F_{min} \geq F_{max}$ .

Ainsi, si l'effort nécessaire pour que la synchronisation soit réalisée dans la durée impartie est susceptible d'endommager l'actionneur de synchronisation et/ou l'anneau de synchronisation, l'embrayage non en prise est mis en oeuvre soit en même temps que le dispositif à anneaux, soit avant. On réduit ainsi la durée nécessaire à la synchronisation dans ce cas de figure.

Selon une première variante, ladite vitesse angulaire $N_{actuel}$ dudit pignon fou est calculée à partir de la vitesse angulaire mesurée $N_{primaire}$ de l'arbre primaire correspondant au rapport à engager.

Selon une deuxième variante, ladite vitesse angulaire $N_{actuel}$ dudit pignon fou est calculée à partir de la vitesse angulaire $N_{primaire}$ dudit arbre primaire correspondant audit rapport à engager, calculée à partir du régime moteur.

Ces deux moyens pour déterminer directement ou indirectement la vitesse angulaire $N_{actuel}$ du pignon fou sont faciles à mettre en oeuvre dans un véhicule automobile.

Selon une première variante, la vitesse angulaire $N_{futur}$ dudit pignon fou synchronisé est calculée à partir de la vitesse angulaire mesurés $N_{roue}$ des roues.

Selon une seconde variante, la vitesse angulaire $N_{futur}$ dudit pignon fou synchronisé est mesurée directement au niveau du au moins un arbre secondaire.

Ces deux moyens pour déterminer la vitesse angulaire $N_{futur}$ du pignon fou synchronisé sont faciles à mettre en oeuvre dans un véhicule automobile.

Selon une première variante, ledit effort $F_{min}$ est précalculé et cartographié.

Selon une seconde variante, ledit effort $F_{min}$ est calculé par intégration de l'équation fondamentale de la dynamique régissant le mouvement dudit pignon fou :

$$J\ddot{\varphi} = M_{actionneur\_de\_synchronisation} - M_{résistant}$$

où J représente le moment d'inertie du pignon fou, $\ddot{\varphi}$ la dérivée par rapport au temps de la vitesse angulaire du pignon fou, $M_{actionneur\_de\_synchronisation}$ le moment de l'effort fourni par l'actionneur de synchronisation et $M_{résistant}$ le moment de l'effort résistant s'exerçant sur le pignon fou.

Ces deux moyens pour déterminer l'effort $F_{min}$ sont faciles à mettre en oeuvre dans un véhicule automobile.

Dans une première variante, ladite consigne de sortie destinée audit actionneur de synchronisation dans le cas où $F_{min} < F_{max}$ est égale à $F_{min}$.

Ainsi, la durée de la synchronisation réalisée au moyen des dispositifs à anneau de synchronisation est toujours la même.

Dans une seconde variante, ladite consigne de sortie destinée audit actionneur de synchronisation dans le cas où $F_{min} < F_{max}$ est comprise entre $F_{min}$ et $F_{max}$ .

Ainsi, avantageusement, la durée de la synchronisation réalisée au moyen des dispositifs à anneaux peut varier et notamment être raccourcie.

De préférence, lorsque $F_{min} \geq F_{max}$, ladite consigne de sortie destinée à commander ledit embrayage correspondant audit rapport à synchroniser est une consigne de fermeture à appui léger dudit embrayage.

Ainsi, l'embrayage non en prise est mis en oeuvre afin de réaliser tout ou partie de la synchronisation, les dispositifs à anneaux ne pouvant effectuer la synchronisation dans la durée impartie.

Dans une première variante, ladite fermeture à appui léger dudit embrayage correspond à un transfert ponctuel d'un couple par ledit embrayage et à sa réouverture dès que ledit couple est transmis.

Dans une seconde variante, ladite fermeture à appui léger dudit embrayage consiste à fermer ledit embrayage jusqu'à l'obtention d'une valeur déterminée de régime dudit pignon fou permettant audit algorithme de déclencher ledit actionneur de synchronisation.

Ainsi, l'embrayage non en prise est mis en oeuvre avant le dispositif à anneaux de synchronisation afin de réaliser une partie de la synchronisation, c'est-à-dire amener le pignon fou à une vitesse angulaire telle que le dispositif à anneaux est apte à être mis en oeuvre. Le dispositif à anneaux n'est mis en oeuvre que lorsque on est sûr qu'il pourra réaliser la synchronisation dans la durée impartie.

De préférence, la consigne de sortie destinée à l'asservissement dudit actionneur de synchronisation est de valeur nulle, lorsque $F_{min} \geq F_{max}$.

Ainsi, on ne met pas en oeuvre les dispositifs à anneaux tant qu'ils ne sont pas en mesure de réaliser la synchronisation dans la durée impartie.

D'autres caractéristiques et avantages de la présente invention résulteront de l'examen de la description qui va suivre présentée uniquement à titre d'exemple non limitatif en références aux figures ci-annexées dans lesquelles :

- la figure 1 présente un schéma d'un dispositif conformé pour la mise en oeuvre du procédé selon l'invention ;
- la figure 2 présente un schéma synoptique de l'arbitrage des consignes de synchronisation du rapport à engager selon le procédé selon l'invention.

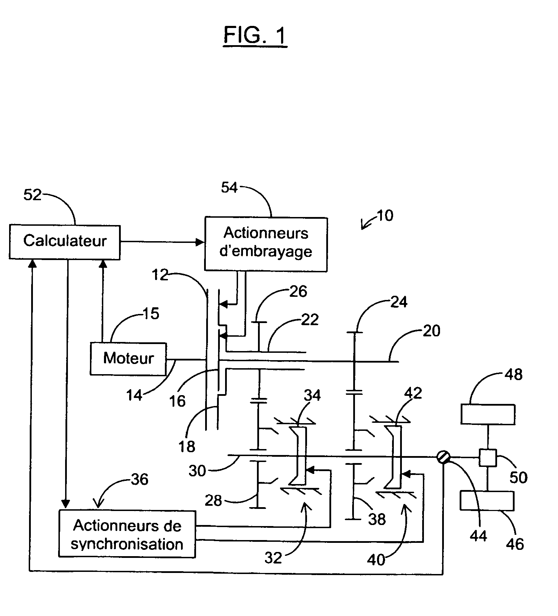

Sur la figure 1, l'embrayage double 10 est principalement constitué d'un volant moteur 12 entraîné en rotation par l'arbre de sortie 14 du moteur 15 et de deux plateaux de pression 16 et 18 concentriques. Le plateau 16 est fixé à un moyeu 20. Le plateau 18 est fixé au moyeu 22. Afin de ne pas nuire à la lisibilité du schéma, un seul engrenage 24 (respectivement 26) est représenté sur le moyeu 20 (respectivement 22), correspondant chacun à un rapport de vitesse. Les moyeux 20 et 22 réalisent les arbres primaires de l'embrayage double 10.

L'engrenage 24 est apte à coopérer avec le pignon fou 28 monté libre en rotation et fixe en translation sur l'arbre secondaire 30. Un dispositif de synchronisation 32 comprenant notamment un anneau de synchronisation 34, monté libre en translation et fixe en rotation sur l'arbre secondaire 30, est commandé par un actionneur de synchronisation 36.

De même l'engrenage 26 est apte à coopérer avec le pignon fou 38 monté libre en rotation et fixe en translation sur l'arbre secondaire 30. Un dispositif de synchronisation 40 comprenant notamment un anneau de synchronisation 42, monté libre en translation et fixe en rotation sur l'arbre secondaire 30, est commandé par un actionneur de synchronisation 36.

Sur l'arbre secondaire 30 est monté un capteur de vitesse angulaire 44, cet arbre secondaire entraînant les roues 46 et 48 via un mécanisme différentiel 50.

Un calculateur 52 reçoit des signaux représentatifs de la vitesse angulaire de l'arbre secondaire 30 et du régime moteur et émet des signaux de commande des actionneurs de synchronisation 36 et des actionneurs d'embrayage 54.

Lorsque l'on veut changer de rapport, en particulier engager un rapport nécessitant un changement d'arbre primaire 20, 22 en prise, il est nécessaire de venir synchroniser, puis craboter le pignon fou 28, 38 correspondant au rapport cible. La synchronisation en question revient à égaliser la vitesse de ce pignon fou 28, 38 et la vitesse de l'arbre secondaire 30.

Au moyen du dispositif selon l'invention, on peut utiliser un dispositif de synchronisation 32, 40 et/ou l'embrayage non en prise 16, 18 afin d'égaliser la vitesse du pignon fou 28, 38 et la vitesse de l'arbre secondaire 30.

Par translation selon la direction de l'axe de rotation de l'arbre secondaire 30, translation commandée par l'actionneur de synchronisation 36, un anneau de synchronisation 34, 42 vient frotter sur le pignon fou 28, 38 à engager de façon à l'accélérer ou à le ralentir, selon les besoins.

Cependant, l'embrayage 16, 18 non en prise peut également être mis en oeuvre. Une fermeture en appui léger de cet embrayage 16, 18 permet en effet de transmettre une partie du couple moteur et ainsi d'accélérer ou de ralentir l'arbre primaire correspondant au rapport de vitesse à engager.

Le calculateur 52 est relié, comme cela est représenté à la figure 1, à un capteur de vitesse angulaire 44 de l'arbre secondaire 30 et à un capteur de régime moteur lui permettant ainsi d'obtenir des signaux représentatifs de la vitesse angulaire de l'arbre secondaire, $N_{secondaire}$, et du régime moteur, $N_{moteur}$

A partir des grandeurs et des informations à la disposition du calculateur 52 (rapport de vitesse engagé, rapport à engager), le procédé, dans une première étape calcule la vitesse angulaire $N_{actuel}$ du pignon fou 28, 38 à synchroniser et sa vitesse future $N_{futur}$, une fois synchronisé au moyen des équations :

$$N_{actuel} = N_{moteur} \times r$$
$$N_{futur} = N_{secondaire} \qquad \text{éq. 1}$$

où r représente le rapport entre la vitesse de rotation de l'arbre primaire 20, 22, $N_{primaire}$, et la vitesse de rotation $N_{actuel}$ du pignon fou 28, 38 considéré. Ce rapport r est une valeur fixée par la mécanique.

Ces grandeurs peuvent également être calculées à partir d'autres grandeurs mesurées. Par exemple, la vitesse de rotation $N_{actuel}$ du pignon fou 28, 38 considéré peut être calculée à partir de la mesure de la vitesse angulaire $N_{primaire}$ de l'arbre primaire 20, 22 concerné :

$$N_{actuel} = N_{primaire} \times r \qquad \text{éq. 2}$$

De même, la vitesse angulaire $N_{futur}$ du pignon fou 28, 38 une fois synchronisé peut être calculée à partir de la mesure de la vitesse angulaire $N_{roue}$ des roues 46, 48 au moyen de l'équation :

$$N_{futur} = \frac{N_{roue}}{r_{pont}} \qquad \text{éq. 3}$$

où $r_{pont}$ est le rapport de pont, c'est-à-dire le rapport entre la vitesse de rotation $N_{roue}$ des roues 46, 48 et la vitesse de rotation $N_{secondaire}$ de l'arbre secondaire 30. Le rapport de pont est donc une donnée mécanique.

Ayant ainsi calculé la vitesse angulaire $N_{actuel}$ d'un pignon fou 28, 38 à synchroniser et sa vitesse angulaire future $N_{futur}$, une fois synchronisé, on peut calculer le différentiel $N_{actuel} - N_{futur}$

Dans une deuxième étape du procédé, on calcule deux efforts.

On calcule, tout d'abord, l'effort minimal $F_{min}$ à appliquer à l'anneau de synchronisation 34, 42 pour synchroniser en un temps prédéterminé, fixé, par exemple, selon des considérations d'agrément de conduite. Cet effort dépend du rapport à engager, du temps de synchronisation prédéterminé et du différentiel $N_{actuel} - N_{futur}$ calculé précédemment. Cet effort peut être calculé préalablement en bureau d'étude et rentré sous forme de cartographie dans le calculateur.

Il pourrait également être calculé en temps réel par le calculateur par intégration de l'équation fondamentale de la dynamique régissant le mouvement du pignon fou :

$$J\ddot{\varphi} = M_{actionneur\_de\_synchronisation} - M_{résistant} \qquad \text{éq. 2}$$

où J représente le moment d'inertie du pignon fou, $\ddot{\varphi}$ la dérivée par rapport au temps de la vitesse angulaire du pignon fou 28, 38, $M_{actionneur\_de\_synchronisation}$ le moment de l'effort fourni par l'actionneur de synchronisation 36 et $M_{résistant}$ le moment de l'effort résistant s'exerçant sur le pignon fou. Ce moment de l'effort résistant $M_{résistant}$ dépend du rapport de vitesse initialement engagé, du rapport de vitesse à engager et du différentiel $N_{actuel} - N_{futur}$. Ce moment peut être calculé préalablement en bureau d'étude et rentré sous forme de cartographie dans le calculateur.

On calcule ensuite un effort $F_{max}$, correspondant au plus petit des deux efforts suivants :

- l'effort maximal que peut supporter l'anneau de synchronisation 34, 42 compte tenu de ses caractéristiques mécaniques, à savoir, entre autres, la matériau dont il est composé et les préconisations provenant des concepteurs de l'anneau comme, par exemple, la pression maximale supportée par l'anneau.
- l'effort maximal que peut fournir l'actionneur de synchronisation 36.

L'effort $F_{max}$ dépend donc, entre autres, de l'anneau de synchronisation concerné et donc du rapport de vitesse concerné, du différentiel de régime $N_{actuel} - N_{futur}$, du temps de synchronisation souhaité puisque, pour une différence de régime $N_{actuel} - N_{futur}$ donnée, plus le temps de synchronisation souhaité est court, plus l'effort à fournir à l'anneau 34, 42 par l'actionneur de synchronisation 36 est grand. Cet effort $F_{max}$ peut être cartographié notamment en fonction de ces paramètres.

Dans une troisième étape, on compare les efforts $F_{min}$ et $F_{max}$ calculés précédemment.

Si $F_{min} < F_{max}$, l'effort nécessaire à synchroniser le pignon fou 28, 38 dans le délai souhaité est inférieur à l'effort acceptable par l'anneau de synchronisation 34, 42 et à l'effort que peut fournir l'actionneur de synchronisation 36 à l'anneau 34, 42. Dans ce cas, l'actionneur de synchronisation 36 est capable de réaliser la synchronisation dans le délai imparti. La sortie de l'algorithme est alors une consigne de commande de l'actionneur de synchronisation 36 concerné. Cette consigne peut par exemple être égale à $F_{min}$, ce qui permet de réaliser la synchronisation dans la durée impartie.

Elle pourrait cependant prendre une valeur entre $F_{min}$ et $F_{max}$, sachant que, plus l'effort appliqué est important, plus la synchronisation est rapide, au détriment de la durée de vie de l'anneau de synchronisation 34, 42 et/ou de l'actionneur de synchronisation 36 (compromis constructeur).

Si $F_{min} \geq F_{max}$, l'effort nécessaire à synchroniser le pignon fou 28, 38 dans le délai souhaité est supérieur à l'effort acceptable par l'anneau 34, 42 de synchronisation ou à l'effort que peut fournir l'actionneur de synchronisation 36 à l'anneau. Dans ce cas, l'actionneur de synchronisation 36 n'est pas capable, seul, de réaliser la synchronisation dans la durée impartie. L'algorithme délivre alors une consigne de sortie destinée à l'actionneur de l'embrayage 54 non en prise. Cette consigne est une consigne de « fermeture à appui léger » de cet embrayage 16, 18 c'est-à-dire qu'on referme légèrement l'embrayage 16, 18 correspondant au rapport à engager.

Selon une première variante, cette fermeture à appui léger peut, par exemple, consister en une fermeture de l'embrayage 16, 18 afin d'obtenir le transfert d'un couple prédéterminé et la réouverture de l'embrayage dès que ce couple est transmis.

Selon une deuxième variante, elle pourrait consister en une fermeture à appui léger de l'embrayage jusqu'à ce que la vitesse de rotation de l'arbre primaire 20, 22 ait atteint une valeur seuil, prédéterminée, permettant au dispositif à anneau de synchronisation 32, 40 de réaliser la synchronisation dans le délai imparti. Bien évidemment, ces exemples de réalisation de fermeture à appui léger sont présentés à titre d'exemples non limitatifs.

Dans le cas où $F_{min} \geq F_{max}$, l'algorithme repart alors à la première étape (détermination des vitesses angulaires actuelle et future $N_{actuel}$ et $N_{futur}$ du pignon fou 28, 38) où la vitesse angulaire actuelle du pignon fou $N_{actuel}$ s'est rapprochée de la vitesse future du pignon fou $N_{futur}$ sous l'action de l'embrayage 16, 18 non en prise.

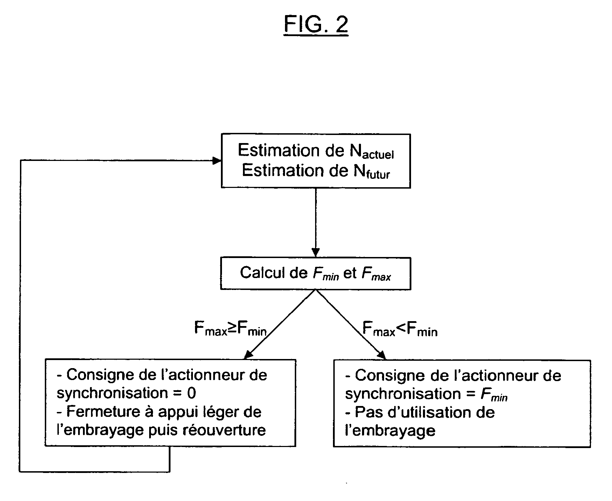

La figure 2 présente un schéma synoptique de l'arbitrage des consignes de synchronisation du rapport à engager selon le procédé selon l'invention.

Bien entendu, la présente invention n'est pas limitée au mode de réalisation décrit, fournit à titre d'exemple indicatif, non limitatif. En effet, un tel procédé s'applique également à un véhicule automobile ou non comportant plus d'un engrenage par arbre primaire, c'est-à-dire plus d'un rapport par arbre primaire. Notamment, si chaque arbre primaire comprend deux rapports de vitesse, l'arbre secondaire comprend quatre pignons fous. Cependant, seuls deux dispositifs de synchronisation à anneaux sont nécessaires dans le cas où chaque dispositif est apte à coopérer avec deux pignons fous. Dans ce cas, la mise en oeuvre du procédé selon l'invention n'exige pas d'équipement supplémentaire par rapport au cas présenté ci avant.

Un tel procédé s'applique également à un véhicule automobile ou non comportant plus d'un axe secondaire, un capteur de vitesse angulaire par arbre secondaire étant alors nécessaire.

## Revendications

1. Procédé de synchronisation des arbres (20, 22, 30) d'une boîte de vitesses (10) de type double embrayage, comportant deux embrayages (16, 18) associés chacun à un arbre primaire (20, 22), au moins un engrenage (24, 26) étant monté sur chacun des arbres primaires (20, 22) et pouvant coopérer avec un pignon fou (28, 38) monté libre en translation sur au moins un arbre secondaire (30), chacun des pignons fous (28, 38) pouvant coopérer avec un dispositif de synchronisation à anneaux (32, 40), commandé chacun par un actionneur de synchronisation (36), mettant en oeuvre l'un desdits dispositifs à anneau de synchronisation (32, 40) pour réaliser la synchronisation desdits arbres primaires (20, 22) et/ou secondaires (30), **caractérisé en ce que** si l'effort nécessaire pour que la synchronisation soit réalisée dans une durée maximale de synchronisation prédéterminée Ds dépasse l'effort maximal que le dispositif de synchronisation peut fournir, alors l'embrayage non en prise (16, 18) est également mis en oeuvre de façon à réaliser la synchronisation dans la durée impartie Ds.

2. Procédé selon la revendication 1, **caractérisé en ce que** le choix du procédé de synchronisation est réalisé selon un algorithme principal comportant les étapes suivantes :

   - calcul du différentiel $N_{actuel} - N_{futur}$ entre la vitesse angulaire $N_{actuel}$ d'un pignon fou (28, 38) à synchroniser et sa vitesse angulaire future $N_{futur}$, une fois synchronisé;
   - calcul d'un effort $F_{min}$ minimal à appliquer sur un anneau de synchronisation (34, 42) pour synchroniser ledit pignon fou (28, 38) dans la durée prédéterminée Ds, ledit effort dépendant, entre autres, dudit différentiel $N_{actuel}$ - $N_{futur}$ ;

- calcul d'un effort $F_{max}$ correspondant au plus grand des deux efforts suivant :

  - l'effort maximal que peut supporter ledit anneau de synchronisation (34, 42) compte tenu de ses caractéristiques mécaniques ;
  - l'effort maximal que peut fournir ledit actionneur de synchronisation (36) ;

- comparaison desdits efforts $F_{min}$ et $F_{max}$ ;
- émission, en fonction de ladite comparaison de $F_{min}$ et $F_{max}$:

  - d'une consigne de sortie destinée à l'asservissement dudit actionneur de synchronisation (36) si $F_{min} < F_{max}$ ;
  - d'une consigne de sortie destinée à l'asservissement de l'actionneur (54) dudit embrayage (16, 18) correspondant audit rapport à synchroniser et, éventuellement, d'une consigne de sortie destinée à l'asservissement dudit actionneur de synchronisation (36) si $F_{min} \geq F_{max}$;

- retour au début dudit algorithme principal si $F_{min} \geq F_{max}$ .

**3.** Procédé selon la revendication 2, **caractérisé en ce que** ladite vitesse angulaire $N_{actuel}$ dudit pignon fou (28, 38) est calculée à partir de la vitesse angulaire mesurée $N_{primaire}$ de l'arbre primaire (20, 22) correspondant au rapport à engager.

**4.** Procédé selon la revendication 3, **caractérisé en ce que** ladite vitesse angulaire $N_{actuel}$ dudit pignon fou (28, 38) est calculée à partir de la vitesse angulaire $N_{primaire}$ dudit arbre primaire (20, 22) correspondant audit rapport à engager, calculée à partir du régime moteur.

**5.** Procédé selon l'une des revendications 2 à 4, **caractérisé en ce que** la vitesse angulaire $N_{futur}$ dudit pignon fou (28, 38) synchronisé est calculée à partir de la vitesse angulaire mesurés $N_{roue}$ des roues (46, 48).

**6.** Procédé selon l'une des revendications 2 à 4, **caractérisé en ce que** la vitesse angulaire $N_{futur}$ dudit pignon fou (28, 38) synchronisé est mesurée directement au niveau du au moins un arbre secondaire (30).

**7.** Procédé selon l'une quelconque des revendications 2 à 6, **caractérisé en ce que** ledit effort $F_{min}$ est précalculé et cartographié.

**8.** Procédé selon l'une quelconque des revendications 2 à 6, **caractérisé en ce que** ledit effort $F_{min}$ est calculé par intégration de l'équation fondamentale de la dynamique régissant le mouvement dudit pignon fou (28, 38) :

$$J\ddot{\varphi} = M_{actionneur\_de\_synchronisation} - M_{résistant} \qquad \text{éq. 2}$$

où J représente le moment d'inertie du pignon fou, $\ddot{\varphi}$ la dérivée par rapport au temps de la vitesse angulaire du pignon fou (28, 38), $M_{actionneur\_de\_synchronisation}$ le moment de l'effort fourni par l'actionneur de synchronisation (36) et $M_{résistant}$ le moment de l'effort résistant s'exerçant sur le pignon fou.

**9.** Procédé selon l'une quelconque des revendications 2 à 8, **caractérisé en ce que** ladite consigne de sortie destinée audit actionneur de synchronisation (36) dans le cas où $F_{min} < F_{max}$ est égale à $F_{min}$.

**10.** Procédé selon l'une quelconque des revendications 2 à 8, **caractérisé en ce que** ladite consigne de sortie destinée audit actionneur de synchronisation (36) dans le cas où $F_{min} < F_{max}$ est comprise entre $F_{min}$ et $F_{max}$.

**11.** Procédé selon l'une quelconque des revendications 2 à 10, **caractérisé en ce que**, lorsque $F_{min} \geq F_{max}$, ladite consigne de sortie destinée à commander ledit embrayage (16, 18) correspondant audit rapport à synchroniser est une consigne de fermeture à appui léger dudit embrayage (16, 18).

**12.** Procédé selon la revendication 11, **caractérisé en ce que** ladite fermeture à appui léger dudit embrayage (16, 18) correspond à un transfert ponctuel d'un couple par ledit embrayage (16, 18) et à sa réouverture dès que ledit couple est transmis.

**13.** Procédé selon la revendication 11, **caractérisé en ce que** ladite fermeture à appui léger dudit embrayage (16, 18) consiste à fermer ledit embrayage (16, 18) jusqu'à l'obtention d'une valeur déterminée de régime dudit pignon fou (28, 38) permettant audit algorithme de déclencher ledit actionneur de synchronisation (36).

**14.** Procédé selon l'une des revendications 11 à 13, **caractérisé en ce que** la consigne de sortie destinée à l'asservissement dudit actionneur de synchronisation (36) est de valeur nulle.

**Claims**

**1.** Method for synchronizing the shafts (20, 22, 30) of a transmission (10) of the double clutch type, comprising two clutches (16, 18) each one associated with a primary shaft (20, 22), at least one gear (24, 26) being mounted on each of the primary shafts (20, 22) and being able to collaborate with an idler pinion (28, 38) mounted free in terms of translational movement on at least one secondary shaft (30), each of the idler pinions (28, 38) being able to collaborate with a synchro rings (32, 40) device in which each ring is controlled via a synchro actuator (36) using one of the said synchro ring devices (32, 40) to synchronize the said primary (20, 22) and/or secondary (30) shafts, **characterized in that** if the force needed to achieve synchronization within a predetermined maximum synchronizing time Ds exceeds the maximum force that the synchro device can provide, then the clutch (16, 18) not engaged is also used in order to achieve synchronization within the given time Ds.

**2.** Method according to Claim 1, **characterized in that** the choice of synchronization method is made according to a main algorithm involving the following steps:

- calculating the differential $N_{current} - N_{future}$ between the angular velocity $N_{current}$ of an idler pinion (28, 38) that is to be synchronized and the future angular velocity $N_{future}$ it will have once sychronized;
- calculating a minimum force $F_{min}$ to be applied to a synchro ring (34, 42) in order to synchronize the said idler pinion (28, 38) within the predetermined time Ds, the said force being dependent, amongst other things, on the said differential $N_{current} - N_{future}$;
- calculating a force $F_{max}$ that corresponds to the greater of the following two forces:

  - the maximum force that the said synchro ring (34, 42) can withstand given its mechanical properties;
  - the maximum force that the said synchro actuator (36) can supply;

- comparing the said forces $F_{min}$ and $F_{max}$;
- transmitting, on the basis of the said comparison between $F_{min}$ and $F_{max}$ :

  - an output datum value intended to control the said sychro actuator (36) if $F_{min} < F_{max}$;
  - an output datum value intended to control the actuator (54) of the said clutch (16, 18) corresponding to the said gear ratio that is to be synchronized and, possibly an output datum valve intended to control the said synchro actuator (36) if $F_{min} \geq F_{max}$ ;

- returning to the start of the said main algorithm if $F_{min} \geq F_{max}$

**3.** Method according to Claim 2, **characterized in that** the said angular velocity $N_{current}$ of the said idler pinion (28, 38) is calculated from the measured angular velocity $N_{primary}$ of the primary shaft (20, 22) corresponding to the gear ratio that is to be engaged.

**4.** Method according to Claim 3, **characterized in that** the said angular velocity $N_{current}$ of the said idler pinion (28, 38) is calculated from the angular velocity $N_{primary}$ of the said primary shaft (20, 22) corresponding to the said gear ratio that is to be engaged, calculated from the engine speed.

**5.** Method according to one of Claims 2 to 4, **characterized in that** the angular velocity $N_{future}$ of the said synchronized idler pinion (28, 38) is calculated from the measured angular velocity $N_{wheel}$ of the wheels (46, 48).

**6.** Method according to one of Claims 2 to 4, **characterized in that** the angular velocity $N_{future}$ of the said synchronized idler pinion (28, 38) is measured directly at the at least one secondary shaft (30).

7. Method according to one of Claims 2 to 6, **characterized in that** the said force $F_{min}$ is precalculated and mapped.

8. Method according to any one of Claims 2 to 6, **characterized in that** the said force $F_{min}$ is calculated by integrating the fundamental dynamic equation governing the movement of the said idler pinion (28, 38) :

$$ J\ddot{\varphi} = M_{synchro\_actuator} - M_{resistive} $$

where J represents the moment of inertia of the idler pinion, $\ddot{\varphi}$ represents the derivative with respect to time of the angular velocity of the idler pinion (28, 38), $M_{synchro\text{-}actuator}$ represents the moment of the force supplied by the synchro actuator (36) and $M_{resistive}$ represents the moment of the resistive force exerted on the idler pinion.

9. Method according to any of Claims 2 to 8, **characterized in that** said output datum value intended for the said synchro actuator (36) when $F_{min} < F_{max}$ is equal to $F_{min}$.

10. Method according to any of Claims 2 to 8, **characterized in that** the said output datum value intended for the said synchro actuator (36) when $F_{min} < F_{max}$ ranges between $F_{min}$ and $F_{max}$.

11. Method according to one of Claims 2 to 10, **characterized in that** when $F_{min} \geq F_{max}$, the said output datum value intended to operate the said clutch (16, 18) corresponding to the said gear ratio that is to be synchronized is a datum value to let the said clutch (16, 18) in just beyond the kiss point.

12. Method according to Claim 11, **characterized in that** letting the said clutch (16, 18) in just beyond the kiss point corresponds to a brief transfer of torque through the said clutch (16, 18) which is then let out again as soon as the said torque has been transmitted.

13. Method according to Claim 11, **characterized in that** letting the said clutch (16, 18) in just beyond the kiss point consists in letting the said clutch (16, 18) in until the said idler pinion (28, 38) reaches a determined speed value that will allow the said algorithm to deploy the said synchro actuator (36).

14. Method according to one of Claims 11 to 13, **characterized in that** the output datum value intended to control the said synchro actuator (36) is of zero value.

**Patentansprüche**

1. Verfahren zur Synchronisation der Wellen (20, 22, 30) eines Schaltgetriebes (10) vom Typ Doppelkupplung, das zwei Kupplungen (16, 18) aufweist, die je einer Hauptwelle (20, 22) zugeordnet sind, wobei mindestens eine Kupplung (24, 26) auf jede der Hauptwellen (20, 22) montiert ist und mit einem Freilaufritzel (28, 38) zusammenwirken kann, das translationsfrei auf mindestens eine Nebenwelle (30) montiert ist, wobei jedes der Freilaufritzel (28, 38) mit einer Synchronisationsvorrichtung mit Ringen (32, 40) zusammenwirken kann, die je von einem Synchronisations-Stellglied (36) gesteuert werden, das eine der Vorrichtungen mit Synchronisationsring (32, 40) verwendet, um die Synchronisation der Hauptwellen (20, 22) und/oder Nebenwellen (30) durchzuführen, **dadurch gekennzeichnet, dass**, wenn die Kraft, die notwendig ist, damit die Synchronisation in einer vorbestimmten maximalen Synchronisationsdauer Ds durchgeführt wird, die maximale Kraft übersteigt, die die Synchronisationsvorrichtung liefern kann, die nicht in Eingriff befindliche Kupplung (16, 18) ebenfalls verwendet wird, um die Synchronisation in der zugewiesenen Dauer Ds durchzuführen.

2. Verfahren nach Anspruch 1, **dadurch gekennzeichnet, dass** die Wahl des Synchronisationsverfahrens gemäß einem Hauptalgorithmus durchgeführt wird, der die folgenden Schritte aufweist:

   - Berechnung des Unterschieds $N_{aktuell}$-$N_{zukunftig}$ zwischen der Winkelgeschwindigkeit $N_{aktuell}$ eines zu syn- chronisierenden Freilaufritzels (28, 38) und seiner zukünftigen Winkelgeschwindigkeit $N_{zukünftig}$, wenn es synchronisiert ist;
   - Berechnung einer Mindestkraft $F_{min}$, die auf einen Synchronisationsring (34, 42) anzuwenden ist, um das Freilaufritzel (28, 38) in der vorbestimmten Dauer Ds zu synchronisieren, wobei die Kraft unter anderen vom Unterschied $N_{aktuell}$-$N_{zukünftig}$ abhängt;
- Berechnung einer Kraft $F_{max}$, die der größeren der zwei folgenden Kräfte entspricht:

    - der maximalen Kraft, die der Synchronisationsring (34, 42) unter Berücksichtigung seiner mechanischen Eigenschaften aushalten kann;
    - der maximalen Kraft, die das Synchronisations-Stellglied (36) liefern kann;

- Vergleich der Kräfte $F_{min}$ und $F_{max}$;
- Ausgabe, in Abhängigkeit von dem Vergleich von $F_{min}$ und $F_{max}$ :

    - eines Ausgangssollwerts, der zur Regelung des Synchronisations-Stellglieds (36) dient, wenn gilt $F_{min} <$ $F_{max}$;
    - eines Ausgangssollwerts, der zur Regelung des Stellglieds (54) der dem zu synchronisierenden Gang entsprechenden Kupplung (16, 18) dient, und ggf. eines Ausgangssollwerts, der zur Regelung des Synchronisations-Stellglieds (36) dient, wenn gilt $F_{min} \geq F_{max}$;

- Rückkehr zum Beginn des Hauptalgorithmus, wenn gilt $F_{min} \geq F_{max}$.

**3.** Verfahren nach Anspruch 2, **dadurch gekennzeichnet, dass** die Winkelgeschwindigkeit $N_{aktuell}$ des Freilaufritzels (28, 38) ausgehend von der gemessenen Winkelgeschwindigkeit $N_{haupt}$ der Hauptwelle (20, 22) entsprechend dem einzulegenden Gang berechnet wird.

**4.** Verfahren nach Anspruch 3, **dadurch gekennzeichnet, dass** die Winkelgeschwindigkeit $N_{aktuell}$ des Freilaufritzels (28, 38) ausgehend von der Winkelgeschwindigkeit $N_{haupt}$ der Hauptwelle (20, 22) entsprechend dem einzulegenden Gang berechnet wird, die ausgehend von der Motordrehzahl berechnet wird.

**5.** Verfahren nach einem der Ansprüche 2 bis 4, **dadurch gekennzeichnet, dass** die Winkelgeschwindigkeit $N_{zukünftig}$ des synchronisierten Freilaufritzels (28, 38) ausgehend von der gemessenen Winkelgeschwindigkeit $N_{rad}$ der Räder (46, 48) berechnet wird.

**6.** Verfahren nach einem der Ansprüche 2 bis 4, **dadurch gekennzeichnet, dass** die Winkelgeschwindigkeit $N_{zukünftig}$ des synchronisierten Freilaufritzels (28, 38) direkt in Höhe der mindestens einen Nebenwelle (30) gemessen wird.

**7.** Verfahren nach einem der Ansprüche 2 bis 6, **dadurch gekennzeichnet, dass** die Kraft $F_{min}$ vorberechnet und kartographiert wird.

**8.** Verfahren nach einem der Ansprüche 2 bis 6, **dadurch gekennzeichnet, dass** die Kraft $F_{min}$ durch Integration der Grundgleichung der Dynamik berechnet wird, die die Bewegung des Freilaufritzels (28, 38) regelt:

$$J\ddot{\varphi} = M_{\text{Synchronisations-Stellglied}} - M_{\text{Widerstand}}$$

wobei J das Trägheitsmoment des Freilaufritzels, $\ddot{\varphi}$ die Ableitung bezüglich der Zeit der Winkelgeschwindigkeit des Freilaufritzels (28, 38), $M_{synchronisations-Stellglied}$ das Moment der vom Synchronisations-Stellglied (36) gelieferten Kraft und $M_{Widerstand}$ das Moment der Widerstandskraft darstellt, die auf das Freilaufritzel ausgeübt wird.

**9.** Verfahren nach einem der Ansprüche 2 bis 8, **dadurch gekennzeichnet, dass** der für das Synchronisations-Stellglied (36) bestimmte Ausgangssollwert in dem Fall, in dem gilt $F_{min} < F_{max}$, gleich $F_{min}$ ist.

**10.** Verfahren nach einem der Ansprüche 2 bis 8, **dadurch gekennzeichnet, dass** der für das Synchronisations-Stellglied (36) bestimmte Ausgangssollwert in dem Fall, in dem gilt $F_{min} < F_{max}$ , zwischen $F_{min}$ und $F_{max}$ liegt.

**11.** Verfahren nach einem der Ansprüche 2 bis 10, **dadurch gekennzeichnet, dass**, wenn gilt $F_{min} \geq F_{max}$, der Ausgangssollwert, der dazu bestimmt ist, die dem zu synchronisierenden Gang entsprechende Kupplung (16, 18) zu steuern, ein Schließsollwert mit leichter Auflage der Kupplung (16, 18) ist.

12. Verfahren nach Anspruch 11, **dadurch gekennzeichnet, dass** das Schließen mit leichter Auflage der Kupplung (16, 18) einer Punktübertragung eines Moments durch die Kupplung (16, 18) und ihrem Wiederöffnen, sobald das Moment übertragen ist, entspricht.

13. Verfahren nach Anspruch 11, **dadurch gekennzeichnet, dass** das Schließen mit leichter Auflage der Kupplung (16, 18) darin besteht, die Kupplung (16, 18) bis zum Erhalt eines bestimmten Drehzahlwerts des Freilaufritzels (28, 38) zu schließen, was es dem Algorithmus erlaubt, das Synchronisations-Stellglied (36) auszulösen.

14. Verfahren nach einem der Ansprüche 11 bis 13, **dadurch gekennzeichnet, dass** der zur Regelung des Synchronisations-Stellglieds (36) bestimmte Ausgangssollwert den Wert Null hat.

## FIG. 1

Calculateur 52

Actionneurs d'embrayage 54

10

Moteur 15

12

26

22

24

20

14

16

18

34

42

48

30

28

38

50

36

Actionneurs de synchronisation

32

40

44

46

## FIG. 2

Estimation de $N_{actuel}$
Estimation de $N_{futur}$

Calcul de $F_{min}$ et $F_{max}$

$F_{max} \geq F_{min}$

$F_{max} < F_{min}$

- Consigne de l'actionneur de synchronisation = 0
- Fermeture à appui léger de l'embrayage puis réouverture

- Consigne de l'actionneur de synchronisation = $F_{min}$
- Pas d'utilisation de l'embrayage

# EP 1 672 253 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5890392 A
- DE 19939819